# EUROPEAN PATENT SPECIFICATION

(11) **EP 2 210 769 B1**
(45) Date of publication and mention of the grant of the patent: **03.03.2021**
(21) Application number: 09075520.8
(22) Date of filing: 25.11.2009
(51) Int. Cl.: B60N 2/02, B60N 2/90, B60N 2/28

(54) **A child vehicle seat as well as a chassis suitable for such a child vehicle seat**
Kinderfahrzeugsitz und für diesen Kinderfahrzeugsitz geeigneter Rahmen
Siège enfant de véhicule ainsi que châssis adapté à ce siège enfant

(30) Priority: 23.01.2009 NL 1036452
(43) Date of publication of application: 28.07.2010
(73) Proprietor: Maxi Miliaan B.V., 5704 RD Helmond (NL)
(72) Inventor: SCHROOTEN, Mark, 2020 Antwerpen (BE); KARREMANS, Taco, 5615 AH Eindhoven (NL)
(74) Representative: Veldman-Dijkers, Cornelia G. C.

(56) References cited:
- EP-A- 0 928 716
- EP-A1- 1 714 826
- WO-A2-2005/108155
- GB-A- 2 424 921
- US-A- 5 581 234
- US-B1- 7 466 221

## Description

The invention relates to a child vehicle seats comprising a chassis, a seat being detachably connectable to the chassis, at least one mounting element for securing the chassis in a vehicle, as well as at least one detector for detecting whether the mounting element is correctly mounted in the vehicle which chassis is further provided with at least one indicator for indicating whether the chassis is correctly secured in the vehicle, whilst the chassis is provided with at least one detector for detecting whether the seat is correctly connected to the chassis.

The invention further relates to a chassis suitable for such a child vehicle seat.

By a child vehicle seat, which is known from GB2424921A, indicator lights on legs of a H-form fitting turn to green for a specified time period when second connectors of the H-form fitting are connected to ISOfix anchor bars of a vehicle seat. The lights turn to green independent of the status of first connectors being connectable to a seat. If desired a user can press a push button on the H-form fitting to check the status of the second connectors.

The object of the invention is to provide a child vehicle seat of which the seat is detachably connectable to the chassis, wherein it can be checked in a simple manner whether the child vehicle seat is correctly secured in the vehicle.

This object is accomplished with the child vehicle seat according to claim 1 and with the chassis suitable for a child seat according to claim 12.

A user will first connect the chassis to the vehicle. Once a correct connection has been effected, this will be indicated by the indicator. If the chassis is not or not yet correctly secured in the vehicle and the chassis does not have a seat connected thereto yet, an alarm signal need not be delivered yet.

If the chassis does have a seat connected thereto, however, there is a risk of a dangerous situation. The fact is that if a child would be placed in the seat and the vehicle would become involved in an accident, the chassis, and the seat connected thereto as well as the child seated therein could freely move through the vehicle in the absence of a correct connection between the chassis and the vehicle, which is undesirable, of course.

Consequently, an alarm signal will be delivered if the seat is connected to the chassis whilst the chassis is not correctly secured in the vehicle.

It has to be noticed that by a child vehicle seat, which is known from the present applicant's European patent application EP-A1-1 477 356, the chassis is provided with two connectors part of the mounting element which are detachably connectable to anchoring elements present in the vehicle.

The known vehicle seat is provided with a red warning knob, which shows up when the two connectors are not both connected to the anchoring elements.

Once the two connectors are both connected to the anchoring elements, a green knob shows up.

The seat of the known child vehicle seat is undetachably connected to the chassis. In this way it is ensured that when the connectors are correctly connected to the anchoring elements, the seat is thus also correctly connected to the vehicle.

A drawback of such a child vehicle seat, which is known per se, is that it is always necessary to transport the seat in combination with the chassis and that it is not possible to transport the seat separately, detached from the chassis, or to use the chassis in combination with another seat.

One embodiment of the child vehicle seat according to the invention is characterised in that no alarm signal is delivered if the chassis is not correctly secured in the vehicle whilst the seat is not correctly connected to the chassis.

In such a situation there is no risk that the chassis will be used by a child, seeing that the chassis does not have a seat connected thereto.

On the other hand, if the chassis is correctly secured in the vehicle, the indicator will deliver a signal to indicate that the chassis is correctly secured in the vehicle. To a user the absence of said signal will suffice to make him or her conclude that the chassis is not correctly secured in the vehicle yet.

Another embodiment of the child vehicle seat according to the invention is characterised in that the child vehicle seat is provided with a check button, wherein, in use, the indicator indicates upon activation of the check button whether the chassis is correctly secured in the vehicle, assuming that the seat is correctly connected to the chassis.

When the check button is operated, the indicator starts from the assumption that a seat is connected to the chassis, also if in fact no seat is present on the chassis. If the chassis is correctly secured in the vehicle, this will be indicated by the indicator. If the chassis is not correctly secured in the vehicle or the check button is operated with the chassis being outside the vehicle, the indicator will deliver the alarm signal. The user is now aware of the fact that the chassis is not correctly secured in the vehicle, whereupon he or she can secure the chassis correctly yet.

Another embodiment of the child vehicle seat according to the invention is characterised in that the mounting element comprises at least one connector, which, in use, is detachably connectable to an anchoring element present in the vehicle.

Such a connector, for example a so-called isofix connector, is suitable for securely anchoring a chassis in a vehicle.

The mounting element my comprise two isofix connectors whereby the chassis comprises one single indicator for indicating whether the chassis is correctly secured in the vehicle.

Yet another embodiment of the child vehicle seat is characterised in that the mounting element is provided with at least one support leg connected to the chassis, which support leg is supported on the vehicle in use.

Such a support leg is known per se from the above-mentioned EP-A1-1 477 356, it is used for supporting the chassis on a floor or other part of the vehicle on a side remote from the isofix connectors. Such a support leg prevents the chassis from tilting with respect to the anchoring elements of the vehicle in case of a collision.

To ensure that such a function will function properly, it is important that the support leg abuts with sufficient force against the floor of the vehicle. Only when sufficient force is exerted on the leg will the detector conclude therefrom that the chassis is correctly secured in the vehicle. If the support leg is not correctly supported on the vehicle, whilst a seat is in fact connected to the chassis, the indicator will deliver the alarm signal.

Preferably, the child vehicle seat comprises connectors as well as at least one support leg, each being provided with detectors and with indicators cooperating therewith.

In this way it is ensured that the chassis is optimally secured in the vehicle, whilst in addition it is ensured that the correctness of the connections is optimally verified.

Yet another embodiment of the child vehicle seat according to the invention is characterised in that the chassis is furthermore provided with an indicator for indicating whether the seat is correctly connected to the chassis.

Because of the presence of said indicator it is immediately clear to a user whether the seat is correctly connected to the chassis.

The invention will now be explained in more detail with reference to the drawings, in which:
Figure 1 shows a chassis of a child vehicle seat according to the invention while the chassis is being secured to anchoring elements in a vehicle;
Figure 2 shows a chassis of a child vehicle seat according to the invention while a support leg connected to the chassis is being supported on the vehicle;
Figure 3 shows a chassis of a child vehicle seat according to the invention while a detachable seat is being connected to the chassis;

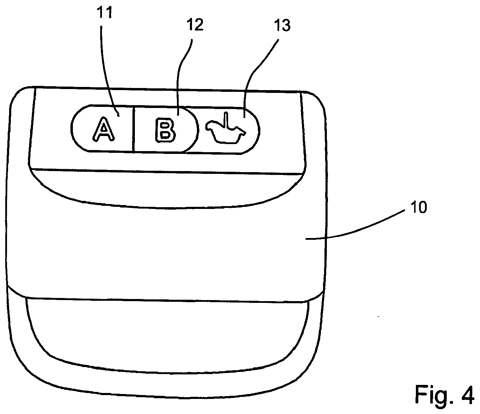

Figure 4 is a larger-scale view of the front side of the chassis, in which the indicators are shown.

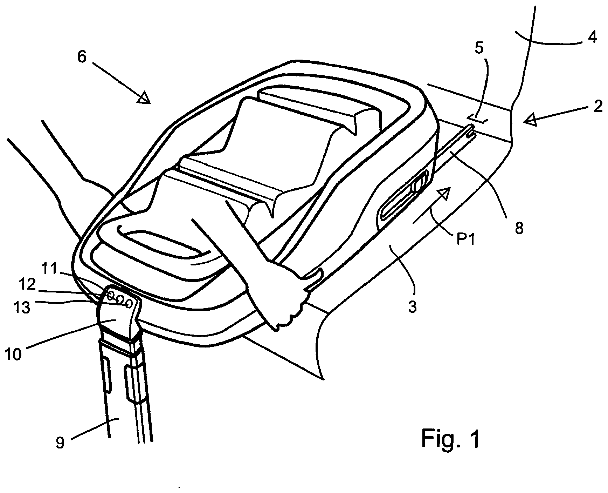

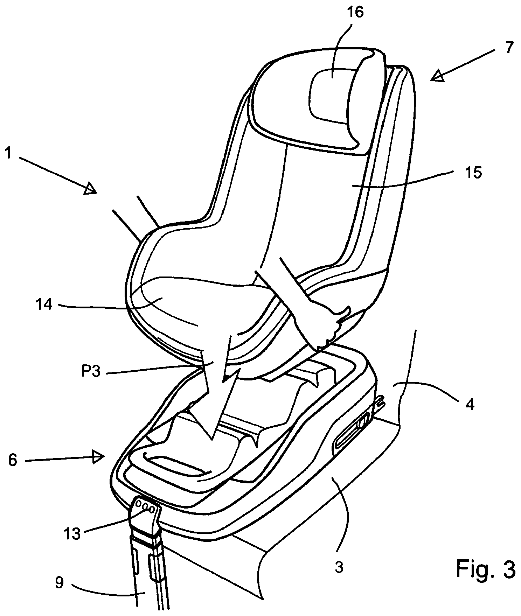

Figures 1-3 show the mounting of a child vehicle seat 1 to a seat 2 of a vehicle (not shown). The vehicle seat 2 comprises a seat portion 3, a backrest 4 and two anchoring elements 5 located between the seat portion 3 and the backrest 4. The child vehicle seat 1 comprises a chassis 6 and a seat 7 (see figure 3) which is detachably connectable to the chassis.

The chassis 6 is provided with two connectors 8 disposed on either side of the chassis 6, which are movable in the direction indicated by the arrow P1 and in the opposite direction and which are detachably connectable to the anchoring elements 5. Like the anchoring elements 5, such connectors 8, for example in the form of isofix connectors, are known per se and will not be explained in more detail herein, therefore. The connectors 8 are connected to detectors which function to detect whether the connectors 8 are correctly connected to the associated anchoring element 5. This may be obtained by means of a lever and a switch, whereby by rotating the lever when connecting the connectors, the switch is being activated by the lever.

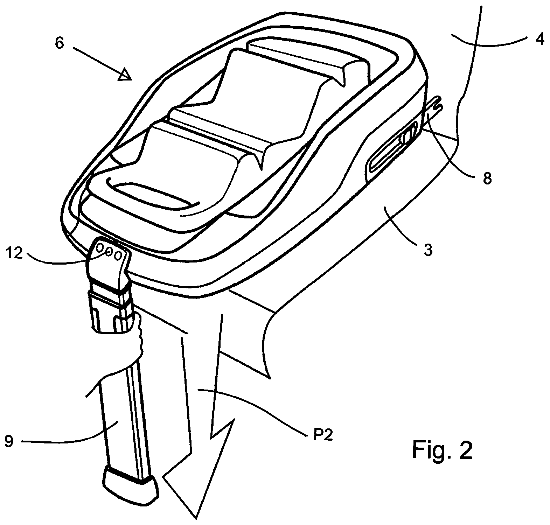

At a front side remote from the connectors 8, the chassis 6 is further provided with a support leg 9, which is telescopically extendable in the direction indicated by the arrow P2 (see figure 2). Such a support leg 9 is known per se and will not be explained in more detail in therein, therefore. The support leg 9 is provided with a detector for detecting whether the support leg 9 is firmly supported, for example on the floor (not shown) of the vehicle. This may be obtained by means of a spring and a switch, whereby after the spring is compressed by a certain amount, the switch is being activated.

Near the front side and the upper side of the support leg 9, the chassis 6 is further provided with a control panel 10, which comprises three indicators 11, 12, 13 arranged side by side.

The seat 7 comprises a seat portion 14, a backrest 15, which joins said seat portion, and a head rest 16, which is movably connected to the backrest 15. The seat 7 further comprises a safety belt system (not shown) which is known per se, by means of which a child can be secured in the seat 7.

Mounting the child vehicle seat to the vehicle seat 2 of a vehicle takes place as follows. Initially, the seat 7 is not connected to the chassis 6.

A user will take hold only of the chassis 6 to connect the connectors 8 to the anchoring elements 5 (see figure 1). If the connectors 8 are correctly connected to the anchoring elements, this will be detected by detectors, whereupon an LED of the first indicator 11 will light up green for a predetermined period of time, for example 30 seconds. If desired, an acoustic signal may be delivered as well.

If the connectors 8 are not or not correctly connected to the anchoring elements 5, the first indicator 11 will not light up. To the user this is an indication that the chassis 6 is not or not correctly connected to the anchoring elements 5.

In case that the seat 7 has been connected to the chassis 6 beforehand, whereby the seat 7 is correctly connected to the chassis 6, an alarm signal will be delivered in the absence of a correct connection between the chassis 6 and the anchoring elements 5. Said alarm signal consists of the LED lighting up red, for example, and/or the sounding of an alerting acoustic signal.

The control panel is furthermore provided with a check button. A user can press said check button at any time.

If the connectors 8 are correctly connected to the anchoring elements 5, the first indicator 11 will light up green.

If the connectors 8 are not not correctly connected to the anchoring elements 5, the first indicator 11 will deliver the alarm signal, which alarm signal will also be delivered if the seat 7 is correctly connected to the chassis 6 but the chassis 6 is not correctly connected to the anchoring elements 5 .

The first indicator 11 will not light up green, nor will it deliver an alarm signal, if the connectors 8 are not or not correctly connected to the anchoring elements 5, the chassis 6 does not have a seat 7 connected thereto and the check button is not operated.

In practice, a user will not proceed to extend the support leg 9 in the direction indicated by the arrow P2 until the support leg 9 abuts firmly against for example the floor of the vehicle (see figure 2) until the user has ascertained that the first indicator 11 has lit up green.

Once the support leg 9 abuts firmly against the floor, this will be detected by means of the detector, whereupon an LED of the second indicator 12 will light up green, for example for 30 seconds.

If the support leg 9 is not correctly supported and the chassis does not have a seat 7 connected thereto, the second indicator 12 will not light up.

If, on the other hand, the chassis 6 has a seat connected thereto, the second indicator 12 will deliver an alarm signal, for example by lighting up red, if the support leg is not correctly supported. In addition to that, an alerting acoustic signal may be delivered.

If at any time the check button is pressed by the user, the second indicator 12 will deliver the alarm signal if the support leg 9 is not correctly supported, irrespective of whether or not the chassis 6 has the seat 7 connected thereto.

In practice a user will not proceed to place the seat 7 on the chassis 6 (figure 3) until both the first indicator 11 and the second indicator 12 light up.

To that end the user will take hold of the seat 7 and move it in the direction indicated by the arrow P3 until the connecting elements of the seat 7 and the chassis 6 are correctly connected together. This condition is detected by detectors. If the seat 7 is correctly connected to the chassis 6, this will be indicated by the third indicator 13, for example in that it lights up green. If the seat 7 is not correctly connected to the chassis 6, the third indicator 13 will not light up.

If the connection between the connectors 8 and the anchoring elements 5 is broken while or after the seat 7 is being or has been connected to the chassis 6, the first indicator 11 will immediately deliver the alarm signal. To the user this is a sign that the child vehicle seat 1 cannot be safely used. Similarly, when the support leg 9 is no longer correctly supported on the vehicle, the second indicator 12 will deliver the alarm signal.

The indicators 11, 12, 13 are LEDs, for example, which are powered by a battery. When the check button is operated, it will also be directly indicated whether the battery is still sufficiently charged. If the battery is not sufficiently charged, an alarm signal will be delivered when the check button is operated, which alarm signal may for example consist of the lighting up of a red LED and the sounding of an acoustic signal. Said alarm signals will also be delivered when a detector first detects that the battery is no longer sufficiently charged for detecting whether the support leg 9 is firmly supported, for example on the floor (not shown) of the vehicle. The alarm signal will also be delivered when one of the connections to be checked is being activated.

It is also possible to connect the chassis 6 to a stroller, for example, instead of to a vehicle seat 2. In the case of such an application, it may suffice to use only the connectors 8 while leaving out the support leg 9.

It is also possible to extend the leg 9 before the connectors 8 are connected to the anchoring elements 5.

It is also possible to give a positive signal instead of an alarm signal, which positive signal is delivered by the indicator in use if the chassis is correctly secured in the vehicle whilst the seat is correctly connected to the chassis. As long as no positive signal is heard or seen, the chassis is not correctly secured.

## Claims

1. A child vehicle seat (1) comprising a chassis (6), a seat (7) being detachably connectable to the chassis (6), at least one mounting element (8) for securing the chassis (6) in a vehicle, as well as at least one detector for detecting whether the mounting element (8) is correctly mounted in the vehicle, which chassis (6) is further provided with at least one indicator (11) for indicating whether the chassis (6) is correctly secured in the vehicle, whilst the chassis (6) is provided with at least one detector for detecting whether the seat (7) is correctly connected to the chassis (6), **characterised in that** when the connection between the mounting elements (8) and the anchoring elements (5) is broken while or after the seat (7) is being or has been connected to the chassis (6), an alarm signal is immediately delivered by the indicator (11) in use if the chassis (6) is not correctly secured in the vehicle whilst the seat (7) is correctly connected to the chassis (6).

2. A child vehicle seat (1) according to claim 1, **characterised in that** no alarm signal is delivered if the chassis (6) is not correctly secured in the vehicle whilst the seat (7) is not correctly connected to the chassis (6).

3. A child vehicle seat (1) according to claim 1 or 2, **characterised in that** the child vehicle seat (1) is provided with a check button, wherein, in use, the indicator indicates upon activation of the check button whether the chassis (6) is correctly secured in the vehicle, assuming that the seat (7) is correctly connected to the chassis (6).

4. A child vehicle seat (1) according to any one of the preceding claims, **characterised in that** the mounting element (8) comprises at least one connector, which is detachably connectable in use to an anchoring element present in the vehicle.

5. A child vehicle seat (1) according to any one of the preceding claims, **characterised in that** the mounting element (8) is provided with at least one support leg (9) connected to the chassis (6), which, in used, is supported on the vehicle.

6. A child vehicle seat (1) according to any one of the preceding claims 1-3, **characterised in that** the child vehicle seat (1) is provided with at least two mounting elements (8), wherein the first mounting element (8) comprises at least one connector, which, in use, is detachably connectable to an anchoring element present in the vehicle, whilst the second mounting element (8) is provided with a support leg (9) connected to the chassis (6), which, in use, is supported on the vehicle.

7. A child vehicle seat (1) according to claim 6, **characterised in that** the chassis (6) is furthermore provided with at least two indicators, wherein the first indicator (11) indicates whether the connector is correctly connected to the vehicle, whilst the second indicator (12) indicates whether the support leg (9) is correctlysupported on the vehicle.

8. A child vehicle seat (1) according to any one of the preceding claims, **characterised in that** the chassis (6) is furthermore provided with an indicator (13) for indicating whether the seat (7) is correctly connected to the chassis (6).

9. A child vehicle seat (1) according to any one of the preceding claims, **characterised in that** the chassis (6) is furthermore provided with an indicator for indicating whether a battery for supplying power to said at least one indicator issufficiently charged.

10. A child vehicle seat (1) according to any one of the preceding claims, **characterised in that** said indicator comprises a light source.

11. A child vehicle seat (1) according to any one of the preceding claims, **characterised in that** said indicator comprises a sound source.

12. A chassis (6) suitable for a child vehicle seat (1) according to any one of the preceding claims, which chassis (6) comprises at least one mounting element (8) for securing the chassis (6) in a vehicle, at least one detector for detecting whether the mounting element (8) is correctly mounted in the vehicle, at least one indicator for indicating whether the chassis (6) is correctly secured in the vehicle, at least one connecting element (8) for detachably connecting a seat (7) to the chassis (6), as well as at least one detector for detecting whether the seat (7) is correctly connected to the chassis (6), whilst when the connection between the mounting elements (8) and the anchoring elements (5) is broken while or after the seat (7) is being or has been connected to the chassis (6), an alarm signal is immediately delivered by the indicator in use if the chassis (6) is not correctly secured in the vehicle whilst the seat (7) is correctly connected to the chassis (6).

13. A child vehicle seat (1) comprising a chassis (6), a seat (7) detachably connectable to the chassis (6), at least one mounting element (8) for securing the chassis (6) in a vehicle, as well as at least one detector for detecting whether the mounting element (8) is correctly mounted in the vehicle, which chassis (6) is further provided with at least one indicator for indicating whether the chassis (6) is correctly secured in the vehicle, whilst the chassis (6) is provided with at least one detector for detecting whether the seat (7) is correctly connected to the chassis (6), **characterised in that** a positive signal is delivered by the indicator in use only if the chassis (6) is correctly secured in the vehicle as well as the seat (7) is correctly connected to the chassis (6).

## Patentansprüche

1. Kinderfahrzeugsitz (1) mit einem Rahmen (6), einem Sitz (7), der lösbar mit dem Rahmen (6) verbindbar ist, mindestens einem Befestigungselement (8) zum Fixieren des Rahmens (6) in einem Fahrzeug, sowie mindestens einem Detektor zum Nachweisen, ob das Befestigungselement (8) vorschriftsmäßig im Fahrzeug befestigt ist, wobei der Rahmen (6) ferner mit mindestens einem Indikator (11) zum Anzeigen, ob der Rahmen (6) vorschriftsmäßig im Fahrzeug fixiert ist, versehen ist, während der Rahmen (6) mit mindestens einem Detektor versehen ist, um nachzuweisen, ob der Sitz (7) vorschriftsmäßig mit dem Rahmen (6) verbunden ist, **dadurch gekennzeichnet, dass** von dem in Gebrauch befindlichen Indikator (11) sofort ein Alarmsignal abgegeben wird, wenn die Verbindung zwischen den Befestigungselementen (8) und den Verankerungselementen (5) unterbrochen ist, während oder nachdem der Sitz (7) mit dem Rahmen (6) verbunden wird oder wurde, wenn der Rahmen (6) nicht vorschriftsmäßig im Fahrzeug fixiert ist, obwohl der Sitz (7) vorschriftsmäßig mit dem Rahmen (6) verbunden ist.

2. Kinderfahrzeugsitz (1) nach Anspruch 1, **dadurch gekennzeichnet, dass** kein Alarmsignal abgegeben wird, wenn der Rahmen (6) nicht vorschriftsmäßig im Fahrzeug fixiert ist, während der Sitz (7) nicht vorschriftsmäßig mit dem Rahmen (6) verbunden ist.

3. Fahrzeugkindersitz (1) nach Anspruch 1 oder 2, **dadurch gekennzeichnet, dass** der Fahrzeugkindersitz (1) mit einem Prüfknopf versehen ist, wobei im Gebrauch der Indikator bei Betätigung des Prüfknopfes anzeigt, ob der Rahmen (6) vorschriftsmäßig im Fahrzeug fixiert ist, unter der Annahme, dass der Sitz (7) vorschriftsmäßig mit dem Rahmen (6) verbunden ist.

4. Kinderfahrzeugsitz (1) nach einem der vorstehenden Ansprüche, **dadurch gekennzeichnet, dass** das Befestigungselement (8) mindestens einen Verbinder aufweist, der im Gebrauch mit einem im Fahrzeug vorhandenen Verankerungselement lösbar verbindbar ist.

5. Kinderfahrzeugsitz (1) nach einem der vorstehenden Ansprüche, **dadurch gekennzeichnet, dass** das Befestigungselement (8) mit mindestens einem mit dem Rahmen (6) verbundenen Stützfuß (9) versehen ist, der im Gebrauch auf dem Fahrzeug abgestützt ist.

6. Kinderfahrzeugsitz (1) nach einem der vorhergehenden Ansprüche 1-3, **dadurch gekennzeichnet, dass** der Kinderfahrzeugsitz (1) mit mindestens zwei Befestigungselementen (8) versehen ist, wobei das erste Befestigungselement (8) mindestens einen Verbinder aufweist, der im Gebrauch mit einem im Fahrzeug vorhandenen Verankerungselement lösbar verbindbar ist, während das zweite Befestigungselement (8) mit einem mit dem Rahmen (6) verbundenen Stützfuß (9) versehen ist, der im Gebrauch auf dem Fahrzeug abgestützt ist.

7. Kinderfahrzeugsitz (1) nach Anspruch 6, **dadurch gekennzeichnet, dass** der Rahmen (6) ferner mit mindestens zwei Indikatoren versehen ist, wobei der erste Indikator (11) anzeigt, ob der Verbinder vorschriftsmäßig mit dem Fahrzeug verbunden ist, während der zweite Indikator (12) anzeigt, ob der Stützfuß (9) vorschriftsmäßig auf dem Fahrzeug abgestützt ist.

8. Kinderfahrzeugsitz (1) nach einem der vorstehenden Ansprüche, **dadurch gekennzeichnet, dass** der Rahmen (6) ferner mit einem Indikator (13) versehen ist, um anzuzeigen, ob der Sitz (7) vorschriftsmäßig mit dem Rahmen (6) verbunden ist.

9. Kinderfahrzeugsitz (1) nach einem der vorhergehenden Ansprüche, **dadurch gekennzeichnet, dass** der Rahmen (6) ferner mit einem Indikator versehen ist, der anzeigt, ob eine Batterie zur Stromversorgung des mindestens einen Indikators ausreichend geladen ist.

10. Kinderfahrzeugsitz (1) nach einem der vorhergehenden Ansprüche, **dadurch gekennzeichnet, dass** der Indikator eine Lichtquelle umfasst.

11. Kinderfahrzeugsitz (1) nach einem der vorhergehenden Ansprüche, **dadurch gekennzeichnet, dass** der Indikator eine Schallquelle umfasst.

12. Rahmen (6), der für einen Kinderfahrzeugsitz (1) nach einem der vorhergehenden Ansprüche geeignet ist, wobei der Rahmen (6) mindestens ein Befestigungselement (8) zum Fixieren des Rahmens (6) in einem Fahrzeug, mindestens einen Detektor zum Nachweisen, ob das Befestigungselement (8) vorschriftsmäßig im Fahrzeug befestigt ist, mindestens einen Indikator zum Anzeigen, ob der Rahmen (6) vorschriftsmäßig im Fahrzeug fixiert ist, mindestens ein Verbindungselement (8) zum lösbaren Verbinden des Sitzes (7) mit dem Rahmen (6) umfasst, sowie mindestens einen Detektor zum Nachweisen, ob der Sitz (7) vorschriftsmäßig mit dem Rahmen (6) verbunden ist, wobei von Indikator (11) im Gebrauch sofort ein Alarmsignal abgegeben wird, wenn die Verbindung zwischen den Befestigungselementen (8) und den Verankerungselementen (5) unterbrochen ist, während oder nachdem der Sitz (7) mit dem Rahmen (6) verbunden wird oder wurde, wenn der Rahmen (6) nicht vorschriftsmäßig im Fahrzeug fixiert ist, obwohl der Sitz (7) vorschriftsmäßig mit dem Rahmen (6) verbunden ist.

13. Kinderfahrzeugsitz (1), umfassend einen Rahmen (6), einen Sitz (7), der lösbar mit dem Rahmen (6) verbindbar ist, mindestens ein Befestigungselement (8) zum Fixieren des Rahmens (6) in einem Fahrzeug, sowie mindestens einen Detektor zum Nachweisen, ob das Befestigungselement (8) vorschriftsmäßig im Fahrzeug befestigt ist, wobei der Rahmen (6) ferner mit mindestens einem Indikator versehen ist, um anzuzeigen, ob der Rahmen (6) vorschriftsmäßig im Fahrzeug fixiert ist, wobei der Rahmen (6) mit mindestens einem Detektor zum Nachweisen, ob der Sitz (7) vorschriftsmäßig mit dem Rahmen (6) verbunden ist, versehen ist, **dadurch gekennzeichnet, dass** vom Indikator im Gebrauch nur dann ein positives Signal abgegeben wird, wenn sowohl der Rahmen (6) vorschriftsmäßig im Fahrzeug fixiert ist als auch der Sitz (7) vorschriftsmäßig mit dem Rahmen (6) verbunden ist.

## Revendications

1. Siège auto pour enfant (1) comprenant un châssis (6), un siège (7) pouvant être raccordé de manière détachable au châssis (6), au moins un élément de montage (8) pour la fixation du châssis (6) dans un véhicule, ainsi qu'au moins un détecteur pour détecter si l'élément de montage (8) est correctement monté dans le véhicule, lequel châssis (6) est en outre doté d'au moins un indicateur (11) pour indiquer si le châssis (6) est correctement fixé dans le véhicule, alors que le châssis (6) est doté d'au moins un détecteur pour détecter si le siège (7) est correctement raccordé au châssis (6), **caractérisé en ce que** lorsque le raccordement entre les éléments de montage (8) et les éléments d'ancrage (5) est interrompu pendant ou après que le siège (7) est ou a été raccordé au châssis (6), un signal d'alarme est immédiatement émis par l'indicateur (11) en utilisation si le châssis (6) n'est pas correctement fixé dans le véhicule alors que le siège (7) est correctement raccordé au châssis (6).

2. Siège auto pour enfant (1) selon la revendication 1, **caractérisé en ce qu'**aucun signal d'alarme n'est émis si le châssis (6) n'est pas correctement fixé dans le véhicule alors que le siège (7) n'est pas correctement raccordé au châssis (6).

3. Siège auto pour enfant (1) selon la revendication 1 ou 2, **caractérisé en ce que** le siège auto pour enfant (1) est doté d'un bouton de contrôle, dans lequel en utilisation, l'indicateur indique suite à l'activation du bouton de contrôle si le châssis (6) est correctement fixé dans le véhicule, en supposant que le siège (7) soit correctement raccordé au châssis (6).

4. Siège auto pour enfant (1) selon l'une quelconque des revendications précédentes, **caractérisé en ce que** l'élément de montage (8) comprend au moins un raccord qui peut être raccordé de manière détachable en utilisation à un élément d'ancrage présent dans le véhicule.

5. Siège auto pour enfant (1) selon l'une quelconque des revendications précédentes, **caractérisé en ce que** l'élément de montage (8) est doté d'au moins une jambe de support (9) raccordée au châssis (6) qui, en utilisation, est supportée sur le véhicule.

6. Siège auto pour enfant (1) selon l'une quelconque des revendications précédentes 1 à 3, **caractérisé en ce que** le siège auto pour enfant (1) est doté d'au moins deux éléments de montage (8), dans lequel le premier élément de montage (8) comprend au moins un raccord qui, en utilisation, peut être raccordé de manière détachable à un élément d'ancrage présent dans le véhicule, tandis que le second élément de montage (8) est doté d'une jambe de support (9) raccordé au châssis (6) qui, en utilisation, est supporté sur le véhicule.

7. Siège auto pour enfant (1) selon la revendication 6, **caractérisé en ce que** le châssis (6) est de plus doté d'au moins deux indicateurs, dans lequel le premier indicateur (11) indique si le raccord est correctement raccordé au véhicule tandis que le second indicateur (12) indique si la jambe de support (9) est correctement supportée sur le véhicule.

8. Siège auto pour enfant (1) selon l'une quelconque des revendications précédentes, **caractérisé en ce que** le châssis (6) est de plus doté d'un indicateur (13) pour indiquer si le siège (7) est correctement raccordé au châssis (6).

9. Siège auto pour enfant (1) selon l'une quelconque des revendications précédentes, **caractérisé en ce que** le châssis (6) est de plus doté d'un indicateur pour indiquer si une batterie pour l'alimentation dudit au moins un indicateur est insuffisamment chargée.

10. Siège auto pour enfant (1) selon l'une quelconque des revendications précédentes, **caractérisé en ce que** ledit indicateur comprend une source de lumière.

11. Siège auto pour enfant (1) selon l'une quelconque des revendications précédentes, **caractérisé en ce que** ledit indicateur comprend une source sonore.

12. Châssis (6) adapté pour un siège auto pour enfant (1) selon l'une quelconque des revendications précédentes, lequel châssis (6) comprend au moins un élément de montage (8) pour la fixation du châssis (6) dans un véhicule, au moins un détecteur pour détecter si l'élément de montage (8) est correctement monté dans le véhicule, au moins un indicateur pour indiquer si le châssis (6) est correctement fixé dans le véhicule, au moins un élément de raccordement (8) pour raccorder de manière détachable un siège (7) au châssis (6), ainsi qu'au moins un détecteur pour détecter si le siège (7) est correctement raccordé au châssis (6) alors que lorsque le raccordement entre les éléments de montage (8) et les éléments d'ancrage (5) est interrompu pendant ou après que le siège (7) est ou a été raccordé au châssis (6), un signal d'alarme est immédiatement émis par l'indicateur en utilisation si le châssis (6) n'est pas correctement fixé dans le véhicule alors que le siège (7) est correctement raccordé au châssis (6).

13. Siège auto pour enfant (1) comprenant un châssis (6), un siège (7) pouvant être raccordé de manière détachable au châssis (6), au moins un élément de montage (8) pour la fixation du châssis (6) dans un véhicule, ainsi qu'au moins un détecteur pour détecter si l'élément de montage (8) est correctement monté dans le véhicule, lequel châssis (6) est en outre doté d'au moins un indicateur pour indiquer si le châssis (6) est correctement fixé dans le véhicule, alors que le châssis (6) est doté d'au moins un détecteur pour détecter si le siège (7) est correctement raccordé au châssis (6), **caractérisé en ce qu'**un signal positif est émis par l'indicateur en utilisation seulement si le châssis (6) est correctement fixé dans le véhicule ainsi que si le siège (7) est correctement raccordé au châssis (6).
